# EUROPEAN PATENT SPECIFICATION

(11) **EP 3 916 269 B1**
(45) Date of publication and mention of the grant of the patent: **19.04.2023**
(21) Application number: 20746001.5
(22) Date of filing: 23.01.2020
(51) Int. Cl.: F16H 59/46, F16H 63/46, F16H 63/50, F16H 61/12, F02D 29/00, F02D 29/06, F16D 48/02, B60K 6/46, B60K 6/48, B60W 10/02, B60L 50/16, B60K 6/442, B60W 20/50

(54) **VEHICLE DRIVING DEVICE AND HYBRID VEHICLE**
FAHRZEUGANTRIEBSVORRICHTUNG UND HYBRIDFAHRZEUG
DISPOSITIF DE CONDUITE DE VÉHICULE ET VÉHICULE HYBRIDE

(30) Priority: 23.01.2019 JP 2019009227
(43) Date of publication of application: 01.12.2021
(73) Proprietor: AISIN CORPORATION, Aichi 448-8650 (JP)
(72) Inventor: SUZUKI,Takahiro, Kariya, Aichi 448-8650 (JP); WATANABE,Tadaaki, Kariya, Aichi 448-8650 (JP)
(74) Representative: TBK
(86) International application number: PCT/JP2020/002340
(87) International publication number: WO 2020/153429

(56) References cited:
- JP-A- 2006 050 767
- JP-A- 2012 131 435
- JP-A- 2014 088 070
- US-A1- 2017 113 679
- US-B2- 9 008 881

## Description

### TECHNICAL FIELD

The technique relates to a vehicle driving device mounted on a vehicle, e.g., an automobile, and a hybrid vehicle.

### BACKGROUND ART

In recent years, development of a hybrid vehicle of a so-called single-motor parallel system has been advanced, the hybrid vehicle including an engine, a motor/generator (hereinafter, simply referred to as "motor"), an engine connection clutch interposed between the engine and the motor, and a transmission mechanism including a clutch that switches between connection and disconnection of power transmission between the engine or the motor and wheels (see, for example, Patent Literature 1).

A hydraulic pressure control device for controlling the transmission mechanism, etc., by hydraulic pressure is mounted on such a hybrid vehicle. The hydraulic pressure control device includes, for example, linear solenoid valves and can output regulated hydraulic pressure from the linear solenoid valves. The engagement state and torque capacity of the engine connection clutch are freely controlled according to hydraulic pressure supplied from the hydraulic pressure control device.

### CITATIONS LIST

### PATENT LITERATURE

Patent Literature 1: WO 2014/051107 A

US 2017/113679 A1 discloses a vehicle driving device according to the preamble of claim 1. Further vehicle driving devices are known from JP 2006 050767 A, US 9 008 881 B2 and JP 2014 088070 A.

### SUMMARY OF INVENTION

### TECHNICAL PROBLEMS

However, in the hybrid vehicle described in Patent Literature 1, for example, when an on-failure has occurred in which a linear solenoid valve in the hydraulic pressure control device cannot stop outputting hydraulic pressure and continues outputting hydraulic pressure, even if an attempt is made to bring the engine connection clutch into a disengaged state, the engine connection clutch may be stuck in an engaged state. In this case, for example, it is conceivable that the engine connection clutch is estimated to be stuck in a completely engaged state and thus control appropriate therefor is performed, but conventionally, sticking of the engine connection clutch in a state in which drag has occurred like a slip-engaged state is not taken into account, and control appropriate therefor has not been performed.

Here, when the engine connection clutch is stuck in a slip-engaged state, clutch plates cause a drag state due to differential rotation between an output shaft of the engine and an input member of the transmission mechanism, and as a result of continuing this state for a long period of time, the clutch palates generate heat, which may result in an overheating state.

In view of this, the present invention provides a vehicle driving device and a hybrid vehicle that can avoid overheating of a clutch that can connect and disconnect power transmission between an engine and a transmission mechanism, when the clutch is stuck in a drag state.

### SOLUTIONS TO PROBLEMS

The object of the invention is achieved with a vehicle driving device according to claim 1 and a hybrid vehicle according to claim 8. Further advantageous developments of the invention are subject-matter of the dependent claims.

### ADVANTAGEOUS EFFECTS OF INVENTION

According to the vehicle driving device and the hybrid vehicle, when the clutch that can connect and disconnect power transmission between the engine and the transmission mechanism is stuck in a drag state, overheating of the clutch can be avoided.

### BRIEF DESCRIPTION OF DRAWINGS

FIG. 1 is a skeleton diagram showing a hybrid vehicle according to an embodiment.
FIG. 2 is a control block diagram showing an ECU of the hybrid vehicle according to the embodiment.
FIG. 3 is a time chart showing operation of the hybrid vehicle according to the embodiment.

### DESCRIPTION OF EMBODIMENTS

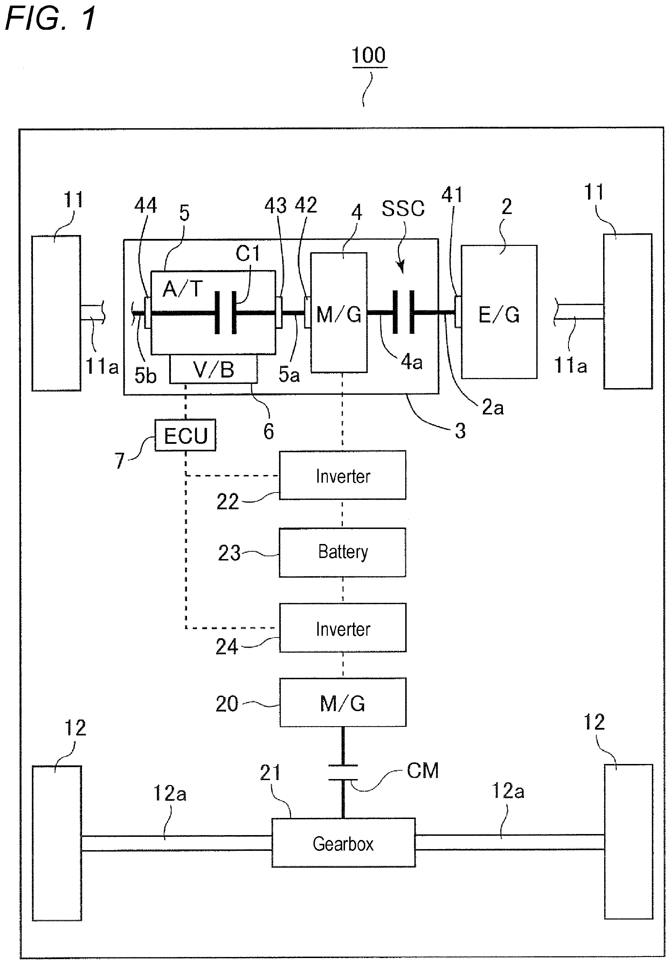

An embodiment of a hybrid vehicle 100 according to the present invention will be described below based on FIGS. 1 to 3. In the present embodiment, the term "drive-coupled" refers to a state in which rotating elements are coupled together such that they can transmit drive power, and is used as a concept including a state in which the rotating elements are coupled together such that they rotate together, or a state in which the rotating elements are coupled together such that they can transmit drive power through a clutch, etc.

As shown in FIG. 1, the hybrid vehicle 100 includes an engine (E/G) 2 and a hybrid driving device (vehicle driving device) 3 connected to an output shaft 2a of the engine 2, as a drive system of left and right front wheels (wheels) 11, and includes a rear motor (M/G) 20 as a drive system of left and right rear wheels 12. By this, it is configured such that the front wheels 11 can perform hybrid traveling of a so-called single-motor parallel system, and the rear wheels 12 can perform EV traveling, and by simultaneously driving the front wheels 11 and the rear wheels 12, four-wheel drive is also possible.

First, the drive system of the front wheels 11 will be described. An output shaft 5b of the hybrid driving device 3 is drive-coupled to a differential device which is not shown, and drive power is transmitted to the left and right front wheels 11 from the differential device through left and right drive shafts 11a. Namely, a pair of the front wheels 11 which is one of a pair of the front wheels 11 and a pair of the rear wheels 12 is drive-coupled to the output shaft 5b of a transmission mechanism 5. The engine rotational speed Ne and engine torque Te of the engine 2 are freely controlled based on instructions from an ECU 7 which will be described later. In addition, on an exterior side of the output shaft 2a of the engine 2 there is provided an engine rotational speed sensor 41 that detects the rotational speed of the output shaft 2a, i.e., engine rotational speed Ne.

The hybrid driving device 3 is configured to roughly include a clutch SSC for engine connection, a motor/generator (first rotating electrical machine, M/G) 4, the transmission mechanism (A/T) 5, and the ECU (control part) 7 that controls these components. The clutch SSC is interposed between the output shaft 2a of the engine 2 and a rotor shaft 4a of the motor/generator (hereinafter, simply referred to as "motor") 4, and can provide friction engagement therebetween. Namely, the clutch SSC is interposed between the output shaft 2a of the engine 2 and an input shaft 5a of the transmission mechanism 5 and provided so as to be able to connect and disconnect power transmission therebetween. Based on an instruction from the ECU 7, the engagement state of the clutch SSC is freely controlled according to clutch hydraulic pressure P_{SSC} supplied from a hydraulic pressure control device (V/B) 6, and the torque capacity of the clutch SSC is also freely controlled.

The motor 4 is provided in a power transmission path between the clutch SSC and the input shaft 5a of the transmission mechanism 5. The motor 4 includes a stator and a rotor whose depiction is omitted, and the rotor shaft 4a having the rotor connected thereto is drive-coupled to an output side of the clutch SSC. The motor rotational speed Nm and motor torque Tm (torque outputted from the motor 4) of the motor 4 are freely controlled based on instructions from the ECU 7. In addition, on an exterior side of the rotor shaft 4a of the motor 4 there is provided a motor rotational speed sensor 42 that detects the rotational speed of the rotor shaft 4a, i.e., motor rotational speed Nm. The rotor shaft 4a is directly drive-coupled to the input shaft 5a of the transmission mechanism 5.

The motor 4 is connected to a battery 23 through an inverter 22. By this, electric power outputted from the battery 23 is fed to the motor 4 through the inverter 22, by which the motor 4 is driven. In addition, by idling the motor 4 upon traveling using the engine 2 or upon coasting, electric power is generated and the battery 23 can be charged.

The transmission mechanism 5 includes the input shaft (input member) 5a driven by the engine 2 and the output shaft (output member) 5b drive-coupled to the front wheels 11, and can change the gear ratio between the input shaft 5a and the output shaft 5b. The transmission mechanism 5 is composed of, for example, a stepped transmission having a gear mechanism including a combination of a plurality of planetary gear trains, and is configured to change the gear ratio by changing a transmission path by changing the friction engagement states of a plurality of friction engagement elements (clutches and a brake) based on hydraulic pressure supplied from the hydraulic pressure control device 6. As some of the plurality of friction engagement elements, a first clutch C1, a second clutch which is not shown, a brake, etc., are provided. The first clutch C1 is configured to freely connect and disconnect power transmission between the input shaft 5a and the output shaft 5b, and can obtain friction engagement by switching between a disengaged state, a slip-engaged state, and a completely engaged state. Namely, the transmission mechanism 5 includes the first clutch C1 that can connect and disconnect power transmission between the input shaft 5a and the output shaft 5b. Based on an instruction from the ECU 7, the engagement state of the first clutch C1 is freely controlled according to first clutch hydraulic pressure P_{C1} supplied from the hydraulic pressure control device 6, and the torque capacity of the first clutch C1 is also freely controlled.

In addition, on an exterior side of the input shaft 5a of the transmission mechanism 5 there is provided an input rotational speed sensor 43 that detects the rotational speed of the input shaft 5a, i.e., input rotational speed (in the present embodiment, the same as the motor rotational speed Nm). Furthermore, on an exterior side of the output shaft 5b of the transmission mechanism 5 there is provided an output rotational speed sensor 44 that detects the rotational speed of the output shaft 5b, i.e., output rotational speed Nout. Since the output shaft 5b is, as described above, drive-coupled to the front wheels 11 through the differential device, etc., the output rotational speed sensor 44 can also be used to detect vehicle speed V.

Note that in the present embodiment, description is made assuming that the first clutch C1 attains first forward gear by, for example, going into an engaged state with a one-way clutch which is not shown, i.e., first forward gear of the transmission mechanism 5 is attained by only one first clutch C1 being engaged. Note, however, that the configuration is not limited thereto, and for example, the first clutch C1 may attain a shift speed that allows the hybrid vehicle 100 to start, such as first forward gear or third forward gear, by being simultaneously engaged with another friction engagement element.

In addition, although in the present embodiment description is made assuming that the transmission mechanism 5 is a stepped transmission, the transmission mechanism 5 may be, for example, a belt, toroidal, or cone-ring continuously variable transmission, and in that case, the first clutch C1 can be considered to be a clutch that is included in the continuously variable transmission and can connect and disconnect power transmission.

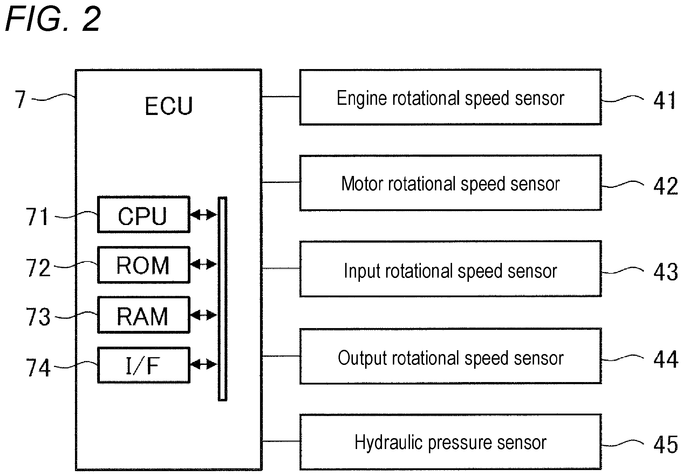

In addition, the above-described clutch SSC, first clutch C1, etc., are friction-engageable elements whose transmittable torque capacity can vary in magnitude depending on the magnitude of hydraulic pressure that presses two or more friction engagement members, and are normally configured to include a piston that presses the friction engagement members, a hydraulic cylinder that presses the piston, and a return spring that acts in an opposite direction to the hydraulic cylinder. Note, however, that the configuration is not limited thereto, and it may be structured such that a piston is driven by differential pressure between opposed cylinders or it may be structured such that the friction engagement members are pressed by, for example, an arm that is allowed to move by a hydraulic actuator. Note that in the present embodiment the clutch SSC is provided with a hydraulic pressure sensor 45 for determining whether an SSC hydraulic pressure instruction value outputted from the ECU 7 and actual clutch hydraulic pressure P_{SSC} are identical (see FIG. 2). Note that although the present embodiment describes a case in which the clutch SSC, the first clutch C1, etc., are hydraulically controlled friction engagement elements, the configuration is not limited thereto, and for example, electromagnetic clutches may be applied.

The states of the clutch SSC and the first clutch C1 are, as described above, controlled by the magnitude of hydraulic pressure, and are classified into a "disengaged state" in which the friction engagement members are separated from each other, a "slip-engaged state" in which torque capacity to be transmitted is generated while slipping, and a "completely engaged state" in which the friction engagement members are fastened together by increasing hydraulic pressure as much as possible. Note that the "slip-engaged state" can be defined to be a period from when the piston strokes after the disengaged state and reaches a stroke end where the piston comes into contact with the friction engagement members until the rotational speeds of the friction engagement members are synchronized with each other, and the "disengaged state" can be defined to be a state in which the piston is less than the stroke end and is separated from the friction engagement members. In the present embodiment, the slip-engaged state of the clutch SSC corresponds to a state in which drag of the clutch SSC has occurred.

The hydraulic pressure control device 6 is composed of, for example, a valve body and includes, for example, a primary regulator valve (not shown) that generates line pressure, etc., from hydraulic pressure supplied from a mechanical oil pump or a motor-driven oil pump which is not shown, and can supply and discharge hydraulic pressure for controlling each of the first clutch C1, the clutch SSC, a motor-disconnecting clutch CM which will be described later, etc., based on control signals from the ECU 7. Hence, the hydraulic pressure control device 6 includes linear solenoid valves for supplying and discharging hydraulic pressure to each engagement element.

Next, the drive system of the rear wheels 12 will be described. The rear motor (second rotating electrical machine) 20 is connected to the battery 23 through an inverter 24, and is configured to be driven and regenerate freely by the inverter 24 performing electric power control thereof based on a drive instruction from the ECU 7. Namely, a pair of the rear wheels 12 which is the other one of a pair of the front wheels 11 and a pair of the rear wheels 12 is drive-coupled to the rear motor 20. The rear motor 20 is drive-coupled to a gearbox 21 through the motor-disconnecting clutch CM. The gearbox 21 includes a reduction gear mechanism with a predetermined reduction ratio and a differential device which are not shown. Upon engagement of the gearbox 21 with the motor-disconnecting clutch CM, the gearbox 21 transmits rotation of the rear motor 20 to the left and right rear wheels 12 while reducing the speed of the rotation by the reduction gear mechanism in the gearbox 21 and absorbing differential rotation between left and right axles 12a by the differential device.

As shown in FIG. 2, the ECU 7 includes, for example, a CPU 71, a ROM 72 that stores a processing program, a RAM 73 that temporarily stores data, and an input and output circuit (I/F) 74, and outputs various types of electrical instructions such as control signals to the hydraulic pressure control device 6 and control signals to the inverters 22 and 24. In order to detect an engagement state of the clutch SSC, etc., to the ECU 7 there are connected the engine rotational speed sensor 41 that detects the rotational speed of the output shaft 2a of the engine 2, the motor rotational speed sensor 42 that detects the rotational speed of the rotor shaft 4a of the motor 4, the input rotational speed sensor 43 that detects the rotational speed of the input shaft 5a of the transmission mechanism 5, the output rotational speed sensor 44 that detects the rotational speed of the output shaft 5b of the transmission mechanism 5, the hydraulic pressure sensor 45 for determining whether an SSC hydraulic pressure instruction value outputted from the ECU 7 and actual clutch hydraulic pressure Pssc are identical, etc.

The ECU 7 freely controls engine rotational speed Ne and engine torque Te by providing instructions to the engine 2 through an engine control part which is not shown. In addition, the ECU 7 freely controls a friction engagement state of the clutch SSC by providing an instruction to the hydraulic pressure control device 6 to perform pressure regulation control of clutch hydraulic pressure P_{SSC}. Namely, the ECU 7 controls the engagement and disengagement of the clutch SSC by electrical instructions. In addition, the ECU 7 freely performs control of motor rotational speed Nm by rotational speed control or control of motor torque Tm by torque control, by controlling electric power of the motor 4 through the inverter 22. In addition, the ECU 7 freely performs control of motor rotational speed by rotational speed control or control of motor torque by torque control, by controlling electric power of the rear motor 20 through the inverter 24.

The ECU 7 performs control by selecting and determining a shift speed based on, for example, vehicle speed and accelerator pedal position and providing an instruction to the hydraulic pressure control device 6 to control hydraulic pressure of each friction engagement element (the clutches and the brake), thereby performing transmission control (gear ratio change). In addition, the ECU 7 freely controls an engagement state (disengagement, slip engagement, completion of engagement, etc.) of the first clutch C1 which is one of the plurality of friction engagement elements by providing an instruction to the hydraulic pressure control device 6 as in the above-described case to perform pressure regulation control of first clutch hydraulic pressure Pci.

In the hybrid vehicle 100 configured in the above-described manner, in traveling using drive power of the engine 2 and/or the motor 4, power outputted from the hybrid driving device 3 is transmitted to the front wheels 11 and the motor-disconnecting clutch CM is disengaged, by which the rear motor 20 goes into a state of being disconnected from the rear wheels 12. Then, in the transmission mechanism 5, an optimal shift speed is determined by the ECU 7 according to a shift range, vehicle speed, and accelerator pedal position, by which the hydraulic pressure control device 6 is electronically controlled, forming a shift speed formed based on the transmission determination. In addition, four-wheel drive can be implemented by driving the rear motor 20 by engaging the motor-disconnecting clutch CM when power outputted from the hybrid driving device 3 is transmitted to the front wheels 11.

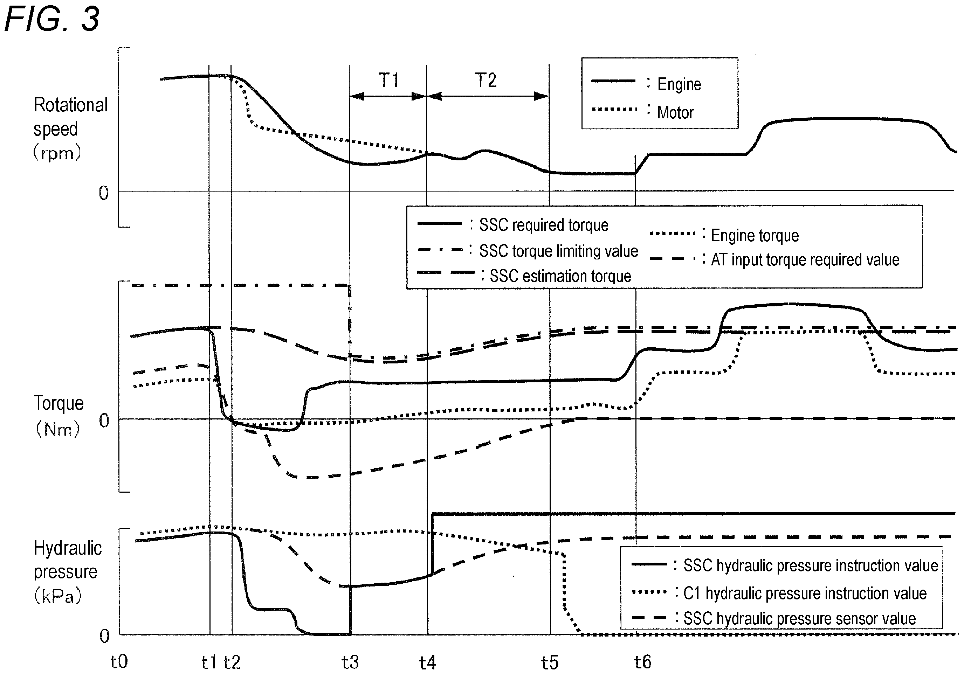

Next, operation performed when a failure in which the clutch SSC is stuck in a slip-engaged state has occurred during engine traveling of the hybrid vehicle 100 of the present embodiment will be described based on a time chart of FIG. 3. Here, a case will be described in which upon switching from HV traveling in which traveling is performed using drive power of the engine 2 to EV traveling in which traveling is performed using drive power of the motor 4, the ECU 7 outputs an electrical instruction to bring the clutch SSC into a disengaged state. Although here the case of switching from HV traveling to EV traveling is described, the case is not limited thereto, and the present embodiment can also be applied to a case of occurrence of a failure in which the clutch SSC is stuck in a slip-engaged state in other cases.

As shown in FIG. 3, at time t0, engine traveling is being performed by bringing the clutch SSC into a completely engaged state to drive the engine 2, the motor 4 is not driven, and the motor-disconnecting clutch CM is in a disengaged state. At this time, an SSC torque limiting value is set to a maximum value.

Then, at time t1, to disengage the clutch SSC, SSC required torque, AT input required torque, and engine torque are reduced, and at time t2, when those torques reach 0, an SSC hydraulic pressure instruction value starts to decrease to bring the clutch SSC into a disengaged state. By the decrease in the SSC hydraulic pressure instruction value, an SSC hydraulic pressure sensor value decreases, and by the SSC hydraulic pressure instruction value decreasing to 0, the clutch SSC transitions from the completely engaged state to a disengaged state in ordinary circumstances.

Here, in the time chart shown in FIG. 3, it is assumed that a failure has occurred in which the clutch SSC goes into a slip-engaged state from the completely engaged state and causes drag, resulting in sticking. Causes of occurrence of the failure in this case include, for example, sticking in a hydraulic pressure output state of a linear solenoid valve in the hydraulic pressure control device 6 that supplies hydraulic pressure to the clutch SSC, and sticking of the clutch SSC itself. At this time, when a detection value of the hydraulic pressure sensor 45 is not 0 despite the SSC hydraulic pressure instruction value being 0, the ECU 7 determines that a failure has occurred. In this case, in the clutch SSC, differential rotation between an input side (an output shaft 2a side of the engine 2) and an output side (an input shaft 5a side of the transmission mechanism 5) occurs, and there is a possibility that continuous traveling may bring the clutch SSC into an overheating state, damaging the clutch SSC.

Hence, in the present embodiment, upon such a failure in which the clutch SSC is stuck in a slip-engaged state, control is performed to suppress differential rotation of the clutch SSC. Namely, when the ECU 7 determines that a drag state of the clutch SSC has occurred when the ECU 7 outputs an electrical instruction to bring the clutch SSC into a disengaged state, the ECU 7 outputs an electrical instruction to bring the clutch SSC into a completely engaged state. In the present embodiment, at time t3, when the ECU 7 determines that a failure in which the clutch SSC is stuck in a slip-engaged state has occurred, the ECU 7 increases the SSC hydraulic pressure instruction value from 0 to a point where the SSC hydraulic pressure instruction value matches actual clutch hydraulic pressure P_{SSC} (in FIG. 3, the SSC hydraulic pressure sensor value).

In the present embodiment, as a technique for determining occurrence of a drag state of the clutch SSC, the ECU 7 determines that a drag state of the clutch SSC has occurred, when a state in which a difference between a clutch torque estimation value and a clutch torque instruction value is greater than or equal to a predetermined value continues for a predetermined period of time. Note that a criterion is not limited to the difference between the clutch torque estimation value and the clutch torque instruction value, and for example, a difference between the SSC hydraulic pressure instruction value and the SSC hydraulic pressure sensor value may be applied.

In addition, at time t3, in order to reduce, e.g., cancel, the differential rotation between the output shaft 2a of the engine 2 and the input shaft 5a of the transmission mechanism 5, the ECU 7 outputs an electrical instruction to limit output torque from the engine 2 to less than or equal to a predetermined torque value. The predetermined torque value used here is set to less than or equal to the clutch torque estimation value. This is because if engine torque exceeds the clutch torque estimation value, then the possibility of the clutch SSC going into a slip state increases. In addition, for the setting of the predetermined torque value, taking into account an error in estimation accuracy of the clutch torque estimation value, the predetermined torque value may be set to a value smaller by a predetermined amount than the clutch torque estimation value by multiplying by a safety factor. In addition, for the output of the electrical instruction, for example, an AT side's ECU transmits an engine torque limiting value to an engine side's ECU, based on clutch estimation torque obtained upon occurrence of a failure.

In the present embodiment, the ECU 7 limits engine torque by reducing the SSC torque limiting value, thereby reducing the differential rotation. The ECU 7 calculates differential rotation of the clutch SSC by comparing detection values of the engine rotational speed sensor 41 and the motor rotational speed sensor 42. Namely, when the ECU 7 determines that a drag state of the clutch SSC has occurred, the ECU 7 outputs an electrical instruction to maintain an engagement state of the clutch SSC present at a point in time when it is determined that the drag state has occurred, until it is determined that differential rotation between the output shaft 2a of the engine 2 and the input shaft 5a of the transmission mechanism 5 has converged.

When the differential rotation is suppressed by limiting the engine torque and is canceled at time t4, the ECU 7 increases the SSC hydraulic pressure instruction value to a maximum value to bring the clutch SSC into a completely engaged state again. Namely, when the ECU 7 determines that the differential rotation has converged, the ECU 7 outputs an electrical instruction to bring the clutch SSC into a completely engaged state. A period T1 from time t3 to t4 is a period for waiting for the differential rotation to converge while performing slip traveling. The hybrid vehicle 100 can perform fail-safe traveling in this state. Note that depending on the cause of occurrence of a failure in the clutch SSC, even when the SSC hydraulic pressure instruction value is increased to the maximum value, the clutch SSC may remain stuck in the slip-engaged state. In this case, too, by performing control to reduce or cancel the differential rotation of the clutch SSC as described above, fail-safe traveling can be performed without overheating the clutch SSC.

Thereafter, when the vehicle speed of the hybrid vehicle 100 gets lower, if engine torque resulting from engine stall prevention control of the engine 2 is transmitted to the transmission mechanism 5, then there is a possibility of occurrence of unintended acceleration. Hence, at time t5, when the vehicle speed of the hybrid vehicle 100 gets lower than a predetermined speed and the engine rotational speed is reduced to idling speed, the first clutch C1 in the transmission mechanism 5 is brought into a disengaged state to shift the transmission mechanism 5 to a neutral range, by which drive-coupling between the input shaft 5a and the output shaft 5b is decoupled. Namely, when the ECU 7 determines that the rotational speed of the input shaft 5a detected by the input rotational speed sensor 43 is less than or equal to a predetermined value when the ECU 7 determines that a drag state of the clutch SSC has occurred and outputs an electrical instruction to bring the clutch SSC into an engaged state, the ECU 7 outputs an electrical instruction to bring the first clutch C1 into a disengaged state. By this, even when the vehicle speed of the hybrid vehicle 100 gets lower, engine torque resulting from engine stall prevention control of the engine 2 is prevented from being transmitted to the transmission mechanism 5, by which occurrence of unintended acceleration can be avoided. Namely, a period T2 from time t4 to t5 is a period for performing traveling using the transmission mechanism 5 while avoiding differential rotation by completely engaging the clutch SSC. The hybrid vehicle 100 can perform fail-safe traveling in this state but, as described above, when the speed is lower than the predetermined speed, the first clutch C1 is brought into a disengaged state.

After bringing the first clutch C1 into the disengaged state, in order to further continue traveling, traveling can continue using the rear wheels 12, with the rear motor 20 being a drive source. At this time, at time t6, by increasing the engine rotational speed and the engine torque to be higher than those at idle, electric power is generated by the motor 4 and the generated electric power can be charged into the battery 23 or can be used to drive the rear motor 20. Namely, in the hybrid vehicle 100, the first clutch C1 is brought into a disengaged state to drive the engine 2, and using electric power generated by the motor 4, the rear motor 20 is driven, by which traveling can be performed. By this, even when the clutch SSC causes a failure such as that described above, the hybrid vehicle 100 of a series system can perform fail-safe traveling using the engine 2, the motor 4, and the rear motor 20.

As described above, according to the hybrid driving device 3 of the present embodiment, when the ECU 7 determines that a drag state of the clutch SSC has occurred when the ECU 7 outputs an electrical instruction to bring the clutch SSC into a disengaged state, the ECU 7 outputs an electrical instruction to bring the clutch SSC into an engaged state. Hence, when the clutch SSC that can connect and disconnect power transmission between the engine 2 and the transmission mechanism 5 is stuck in a drag state, overheating of the clutch SSC can be avoided.

In addition, according to the hybrid driving device 3 of the present embodiment, when the above-described failure has occurred in the clutch SSC, the ECU 7 outputs an electrical instruction to limit output torque from the engine 2 to less than or equal to the predetermined torque value so as to reduce, e.g., cancel, differential rotation between the output shaft 2a of the engine 2 and the input shaft 5a of the transmission mechanism 5. Hence, when the clutch SSC that can connect and disconnect power transmission between the engine 2 and the transmission mechanism 5 is stuck in a drag state, occurrence of a shock can be reduced over a case in which the clutch SSC is immediately and suddenly brought into a completely engaged state.

In addition, according to the hybrid driving device 3 of the present embodiment, when the vehicle speed of the hybrid vehicle 100 gets lower than the predetermined speed and the engine rotational speed is reduced to idling speed, the first clutch C1 in the transmission mechanism 5 is brought into a disengaged state to shift the transmission mechanism 5 to the neutral range, by which drive-coupling between the input shaft 5a and the output shaft 5b is decoupled. By this, even when the vehicle speed of the hybrid vehicle 100 gets lower, engine torque resulting from engine stall prevention control of the engine 2 is prevented from being transmitted to the transmission mechanism 5, by which occurrence of unintended acceleration can be avoided.

In addition, according to the hybrid vehicle 100 of the present embodiment, after bringing the first clutch C1 into a disengaged state, in order to further continue traveling, traveling can continue using the rear wheels 12, with the rear motor 20 being a drive source. At this time, the first clutch C 1 is brought into a disengaged state to drive the engine 2, and using electric power generated by the motor 4, the rear motor 20 is driven, by which traveling can be performed. By this, even when the clutch SSC causes a failure such as that described above, traveling can be performed using the engine 2, the motor 4, and the rear motor 20 as the hybrid vehicle 100 of a series system does. Namely, although the hybrid vehicle 100 is originally a hybrid vehicle of a single-motor parallel system, when it becomes difficult to perform traveling of the single-motor parallel system due to a failure in the clutch SSC, traveling can be performed as the hybrid vehicle 100 of a series system does.

Note that although in the present embodiment described above a case is described in which the ECU 7 outputs an electrical instruction to limit output torque from the engine 2 to less than or equal to the predetermined torque value so as to reduce, e.g., cancel, differential rotation between the output shaft 2a of the engine 2 and the input shaft 5a of the transmission mechanism 5, the configuration is not limited thereto. For example, the differential rotation between the output shaft 2a of the engine 2 and the input shaft 5a of the transmission mechanism 5 does not need to be reduced to the extent that the differential rotation is canceled. In this case, after detecting a failure, the ECU 7 may, for example, reduce the differential rotation and allow the clutch SSC to be completely engaged even if the differential rotation does not reach 0 or may, for example, immediately allow the clutch SSC to be completely engaged without reducing the differential rotation.

In addition, although in the present embodiment described above a case is described in which the hybrid vehicle 100 includes the rear motor 20 that can drive the rear wheels 12, the configuration is not limited thereto. For example, the rear motor 20 may not be included. In this case, after decoupling drive-coupling between the input shaft 5a and the output shaft 5b by shifting the transmission mechanism 5 to the neutral range at time t5 shown in FIG. 3, traveling cannot be performed and thus by stopping the engine 2, fail-safe traveling is terminated.

In addition, in the present embodiment described above, a pair of the front wheels 11 which is one of a pair of the front wheels 11 and a pair of the rear wheels 12 is drive-coupled to the output shaft 5b of the transmission mechanism 5, and a pair of the rear wheels 12 which is the other one of a pair of the front wheels 11 and a pair of the rear wheels 12 is drive-coupled to the rear motor 20. Note, however, that the configuration is not limited thereto, and the front wheels 11 may be drive-coupled to the rear motor 20 and the rear wheels 12 may be drive-coupled to the output shaft 5b of the transmission mechanism 5.

In addition, although in the present embodiment described above a case is described in which the clutch SSC is applied as a clutch that is interposed between the output shaft 2a of the engine 2 and the input shaft 5a of the transmission mechanism 5 and can perform connection and disconnection, the configuration is not limited thereto. For example, as the above-described clutch, a lock-up clutch provided together with a torque converter may be applied.

Note that the present embodiment includes at least the following configurations. A vehicle driving device (3) of the present embodiment includes a transmission mechanism (5) that includes an input member (5a) driven by an engine (2) and an output member (5b) drive-coupled to wheels (11) and that can change a gear ratio between the input member (5a) and the output member (5b); a clutch (SSC) that is interposed between an output shaft (2a) of the engine (2) and the input member (5a) and can connect and disconnect power transmission between the output shaft (2a) of the engine (2) and the input member (5a) of the transmission mechanism (5); and a control part (7) that controls engagement and disengagement of the clutch (SSC) by electrical instructions, and when the control part (7) determines that a drag state of the clutch (SSC) has occurred when the control part (7) outputs an electrical instruction to bring the clutch (SSC) into a disengaged state, the control part (7) outputs an electrical instruction to bring the clutch (SSC) into a completely engaged state.

According to this configuration, when the clutch (SSC) that can connect and disconnect power transmission between the engine (2) and the transmission mechanism (5) is stuck in a drag state, overheating of the clutch (SSC) can be avoided.

In addition, in the vehicle driving device (3) of the present embodiment, when the control part (7) determines that a drag state of the clutch (SSC) has occurred, the control part (7) outputs an electrical instruction to maintain an engagement state of the clutch (SSC) present at a point in time when it is determined that a drag state has occurred, until it is determined that differential rotation between the output shaft (2a) of the engine (2) and the input member (5a) of the transmission mechanism (5) has converged, and when it is determined that the differential rotation has converged, the control part (7) outputs an electrical instruction to bring the clutch (SSC) into a completely engaged state.

For example, if an electrical instruction to bring the clutch (SSC) into a completely engaged state is outputted in a state in which there is differential rotation between the output shaft (2a) of the engine (2) and the input member (5a) of the transmission mechanism (5), then there is a possibility that sticking in a drag state may be suddenly cancelled. In this case, the clutch is suddenly engaged, which may cause an engagement shock on the vehicle. On the other hand, according to the configuration of the vehicle driving device (3) of the present embodiment, occurrence of such an engagement shock can be reduced.

In addition, in the vehicle driving device (3) of the present embodiment, when the control part (7) determines that a drag state of the clutch (SSC) has occurred when the control part (7) outputs an electrical instruction to bring the clutch (SSC) into a disengaged state, the control part (7) outputs an electrical instruction to limit output torque from the engine (2) to less than or equal to a predetermined torque value so as to reduce differential rotation between the output shaft (2a) of the engine (2) and the input member (5a) of the transmission mechanism (5).

According to this configuration, when the clutch (SSC) that can connect and disconnect power transmission between the engine (2) and the transmission mechanism (5) is stuck in a drag state, occurrence of a shock can be reduced over a case in which the clutch (SSC) is immediately and suddenly brought into a completely engaged state.

In addition, in the vehicle driving device (3) of the present embodiment, when the control part (7) determines that a drag state of the clutch (SSC) has occurred when the control part (7) outputs an electrical instruction to bring the clutch (SSC) into a disengaged state, the control part (7) outputs an electrical instruction to limit output torque from the engine (2) to less than or equal to a predetermined torque value so as to cancel differential rotation between the output shaft (2a) of the engine (2) and the input member (5a) of the transmission mechanism (5).

According to this configuration, when the clutch (SSC) that can connect and disconnect power transmission between the engine (2) and the transmission mechanism (5) is stuck in a drag state, occurrence of a shock can be reduced over a case in which the clutch (SSC) is brought into a completely engaged state before differential rotation of the clutch (SSC) is canceled.

In addition, in the vehicle driving device (3) of the present embodiment, the predetermined torque value is set to less than or equal to a clutch torque estimation value. According to this configuration, if engine torque exceeds the clutch torque estimation value, then there is a possibility of occurrence of slipping in the clutch (SSC). Thus, by setting the predetermined torque value to at least less than or equal to the clutch torque estimation value, occurrence of a drag state of the clutch (SSC) can be suppressed.

In addition, in the vehicle driving device (3) of the present embodiment, when a state in which a difference between a clutch torque estimation value and a clutch torque instruction value is greater than or equal to a predetermined value continues for a predetermined period of time when the control part (7) outputs an electrical instruction to bring the clutch (SSC) into a disengaged state, the control part (7) determines that a drag state of the clutch (SSC) has occurred. According to this configuration, whether a drag state has occurred can be easily and appropriately determined.

In addition, in the vehicle driving device (3) of the present embodiment, the transmission mechanism (5) includes an engagement element (C1) that can connect and disconnect power transmission between the input member (5a) and the output member (5b), and when the control part (7) determines that a rotational speed of the input member (5a) is less than or equal to a predetermined value when the control part (7) determines that a drag state of the clutch (SSC) has occurred and outputs an electrical instruction to bring the clutch (SSC) into a completely engaged state, the control part (7) outputs an electrical instruction to bring the engagement element (C1) into a disengaged state.

According to this configuration, engine torque resulting from engine stall prevention control of the engine (2) is prevented from being transmitted to the transmission mechanism (5), for example, when the vehicle speed of a hybrid vehicle (100) gets lower than a predetermined speed and the engine rotational speed is reduced to idling speed, by which occurrence of unintended acceleration can be avoided.

In addition, the vehicle driving device (3) of the present embodiment includes a first rotating electrical machine (4) provided in a power transmission path between the clutch (SSC) and the input member (5a), and the control part (7) outputs an electrical instruction to bring the clutch (SSC) into a disengaged state, upon switching from HV traveling in which traveling is performed using drive power of the engine (2) to EV traveling in which traveling is performed using drive power of the first rotating electrical machine (4). According to this configuration, the vehicle driving device (3) can implement hybrid traveling of a single-motor parallel system. When the clutch (SSC) that can connect and disconnect power transmission between the engine (2) and the transmission mechanism (5) is stuck in a drag state upon switching from HV traveling to EV traveling, overheating of the clutch (SSC) can be avoided.

In addition, a hybrid vehicle (100) of the present embodiment includes a vehicle driving device (3) being the above-described vehicle driving device (3) and including a first rotating electrical machine (4) in a power transmission path between the clutch (SSC) and the input member (5a); a second rotating electrical machine (20); and front wheels (11) and rear wheels (12), and one of a pair of the front wheels (11) and a pair of the rear wheels (12) is drive-coupled to the output member (5b), the other one of a pair of the front wheels (11) and a pair of the rear wheels (12) is drive-coupled to the second rotating electrical machine (20), the transmission mechanism (5) includes an engagement element (C1) that can connect and disconnect power transmission between the input member (5a) and the output member (5b), and the engagement element (C1) is brought into a disengaged state to drive the engine (2), and using electric power generated by the first rotating electrical machine (4), the second rotating electrical machine (20) is driven, by which traveling can be performed.

According to this configuration, even when the control part (7) determines that a drag state of the clutch (SSC) has occurred when the control part (7) outputs an electrical instruction to bring the clutch (SSC) into a disengaged state, traveling can be performed using the engine (2), the first rotating electrical machine (4), and the second rotating electrical machine (20), as the hybrid vehicle (100) of a series system does.

### INDUSTRIAL APPLICABILITY

A vehicle driving device and a hybrid vehicle according to the present invention can be mounted on a vehicle, e.g., an automobile, and are suitable for use in a hybrid vehicle of a single-motor parallel system.

### REFERENCE SIGNS LIST

2: Engine, 2a: Output shaft, 3: Hybrid driving device (vehicle driving device), 4: Motor/generator (first rotating electrical machine), 5: Transmission mechanism, 5a: Input shaft (input member), 5b: Output shaft (output member), 7: ECU (control part), 11: Front wheel (wheel), 12: Rear wheel, 20: Rear motor (second rotating electrical machine), 100: Hybrid vehicle, C1: First clutch (engagement element), and SSC: Clutch

## Claims

1. A vehicle driving device (3) comprising:
a transmission mechanism (5) that includes an input member (5a) driven by an engine (2) and an output member (5b) drive-coupled to wheels (11) and that can change a gear ratio between the input member (5a) and the output member (5b);
a clutch (SSC) that is interposed between an output shaft (2a) of the engine (2) and the input member (5a) and can connect and disconnect power transmission between the output shaft (2a) of the engine (2) and the input member (5a) of the transmission mechanism (5); and
a control part (7) that controls engagement and disengagement of the clutch (SSC) by electrical instructions,
wherein
when the control part (7) determines that a drag state of the clutch (SSC) has occurred when the control part (7) outputs an electrical instruction to bring the clutch (SSC) into a disengaged state, the control part (7) outputs an electrical instruction to bring the clutch (SSC) into a completely engaged state,
the vehicle driving device being **characterized in that**
when the control part (7) determines that a drag state of the clutch (SSC) has occurred, the control part (7) outputs an electrical instruction to maintain an engagement state of the clutch (SSC) present at a point in time when it is determined that a drag state has occurred, until it is determined that differential rotation between the output shaft (2a) of the engine (2) and the input member (5a) of the transmission mechanism (5) has converged, and when it is determined that the differential rotation has converged, the control part (7) outputs an electrical instruction to bring the clutch (SSC) into a completely engaged state.

2. The vehicle driving device (3) according to claim 1, wherein when the control part (7) determines that a drag state of the clutch (SSC) has occurred when the control part (7) outputs an electrical instruction to bring the clutch (SSC) into a disengaged state, the control part (7) outputs an electrical instruction to limit output torque from the engine (2) to less than or equal to a predetermined torque value so as to reduce differential rotation between the output shaft (2a) of the engine (2) and the input member (5a) of the transmission mechanism (5).

3. The vehicle driving device (3) according to claim 1, wherein when the control part (7) determines that a drag state of the clutch (SSC) has occurred when the control part (7) outputs an electrical instruction to bring the clutch (SSC) into a disengaged state, the control part (7) outputs an electrical instruction to limit output torque from the engine (2) to less than or equal to a predetermined torque value so as to cancel differential rotation between the output shaft (2a) of the engine (2)and the input member (5a) of the transmission mechanism (5).

4. The vehicle driving device (3) according to claim 2 or 3, wherein the predetermined torque value is set to less than or equal to a clutch torque estimation value.

5. The vehicle driving device (3) according to any one of claims 1 to 4, wherein when a state in which a difference between a clutch torque estimation value and a clutch torque instruction value is greater than or equal to a predetermined value continues for a predetermined period of time when the control part (7) outputs an electrical instruction to bring the clutch (SSC) into a disengaged state, the control part (7) determines that a drag state of the clutch (SSC) has occurred.

6. The vehicle driving device (3) according to any one of claims 1 to 5, wherein
the transmission mechanism (7) includes an engagement element (C1) that can connect and disconnect power transmission between the input member (5a) and the output member (5b), and
when the control part (7) determines that a rotational speed of the input member (5a) is less than or equal to a predetermined value when the control part (7) determines that a drag state of the clutch (SSC) has occurred and outputs an electrical instruction to bring the clutch (SSC) into a completely engaged state, the control part (7) outputs an electrical instruction to bring the engagement element (C1) into a disengaged state.

7. The vehicle driving device (3) according to any one of claims 1 to 6, comprising a first rotating electrical machine (4) provided in a power transmission path between the clutch (SSC) and the input member (5a),
wherein
the control part (7) outputs an electrical instruction to bring the clutch (SSC) into a disengaged state, upon switching from HV traveling in which traveling is performed using drive power of the engine (2) to EV traveling in which traveling is performed using drive power of the first rotating electrical machine (4).

8. A hybrid vehicle (100) comprising:
a vehicle driving device (3) being a vehicle driving device (3) according to any one of claims 1 to 7 and including a first rotating electrical machine (4) in a power transmission path between the clutch (SSC) and the input member (5a);
a second rotating electrical machine (20); and
front wheels (11) and rear wheels (12),
wherein
one of a pair of the front wheels (11) and a pair of the rear wheels (12) is drive-coupled to the output member (5b),
an other one of a pair of the front wheels (11) and a pair of the rear wheels (12) is drive-coupled to the second rotating electrical machine (20),
the transmission mechanism (5) includes an engagement element (C1) that can connect and disconnect power transmission between the input member (5a) and the output member (5b), and
the engagement element (C1) is brought into a disengaged state to drive the engine (2), and using electric power generated by the first rotating electrical machine (4), the second rotating electrical machine (20) is driven, by which traveling can be performed.

## Patentansprüche

1. Fahrzeugantriebsvorrichtung (3) mit:
einem Getriebemechanismus (5), der ein Eingangsbauteil (5a), das durch eine Maschine (2) angetrieben wird, und ein Ausgangsbauteil (5b), das mit Rädern (11) antriebsgekoppelt ist, hat und der ein Übersetzungsverhältnis zwischen dem Eingangsbauteil (5a) und dem Ausgangsbauteil (5b) ändern kann;
einer Kupplung (SSC), die zwischen einer Ausgangswelle (2a) der Maschine (2) und dem Eingangsbauteil (5a) angeordnet ist und eine Leistungsübertragung zwischen der Ausgangswelle (2a) der Maschine (2) und dem Eingangsbauteil (5a) des Getriebemechanismus (5) verbinden und trennen kann; und
einem Steuerungsteil (7), der ein Einrücken und Ausrücken der Kupplung (SSC) durch elektrische Anweisungen steuert, wobei
wenn der Steuerungsteil (7) bestimmt, dass ein Schleppzustand der Kupplung (SSC) aufgetreten ist, wenn der Steuerungsteil (7) eine elektrische Anweisung ausgibt, um die Kupplung (SSC) in einen ausgerückten Zustand zu bringen, der Steuerungsteil (7) eine elektrische Anweisung ausgibt, um die Kupplung (SSC) in einen vollständig eingerückten Zustand zu bringen,
wobei die Fahrzeugantriebsvorrichtung **dadurch gekennzeichnet ist, dass**
wenn der Steuerungsteil (7) bestimmt, dass ein Schleppzustand der Kupplung (SSC) aufgetreten ist, der Steuerungsteil (7) eine elektrische Anweisung ausgibt, um einen Einrückzustand der Kupplung (SSC), der bei einem Zeitpunkt vorhanden ist, wenn bestimmt wird, dass ein Schleppzustand aufgetreten ist, aufrechtzuerhalten bis bestimmt wird, dass eine Differenzialdrehung zwischen der Ausgangswelle (2a) der Maschine (2) und dem Eingangsbauteil (5a) des Getriebemechanismus (5) konvergiert ist, und, wenn bestimmt wird, dass die Differenzialdrehung konvergiert ist, der Steuerungsteil (7) eine elektrische Anweisung ausgibt, um die Kupplung (SSC) in einen vollständig eingerückten Zustand zu bringen.

2. Fahrzeugantriebsvorrichtung (3) nach Anspruch 1, wobei, wenn der Steuerungsteil (7) bestimmt, dass ein Schleppzustand der Kupplung (SSC) aufgetreten ist, wenn der Steuerungsteil (7) eine elektrische Anweisung ausgibt, um die Kupplung (SSC) in einen ausgerückten Zustand zu bringen, der Steuerungsteil (7) eine elektrische Anweisung ausgibt, um ein Ausgabedrehmoment von der Maschine (2) auf weniger als oder gleich wie einen vorbestimmten Drehmomentwert zu begrenzen, um eine Differenzialdrehung zwischen der Ausgangswelle (2a) der Maschine (2) und dem Eingangsbauteil (5a) des Getriebemechanismus (5) zu verringern.

3. Fahrzeugantriebsvorrichtung (3) nach Anspruch 1, wobei, wenn der Steuerungsteil (7) bestimmt, dass ein Schleppzustand der Kupplung (SSC) aufgetreten ist, wenn der Steuerungsteil (7) eine elektrische Anweisung ausgibt, um die Kupplung (SSC) in einen ausgerückten Zustand zu bringen, der Steuerungsteil (7) eine elektrische Anweisung ausgibt, um ein Ausgangsdrehmoment von der Maschine (2) auf geringer als oder gleich wie einen vorbestimmten Drehmomentwert zu begrenzen, um eine Differenzialdrehung zwischen der Ausgangswelle (2a) der Maschine (2) und dem Eingangsbauteil (5a) des Getriebemechanismus (5) aufzuheben.

4. Fahrzeugantriebsvorrichtung (3) nach Anspruch 2 oder 3, wobei der vorbestimmte Drehmomentwert auf geringer als oder gleich wie ein Kupplungsdrehmomentschätzwert festgelegt ist.

5. Fahrzeugantriebsvorrichtung (3) nach einem der Ansprüche 1 bis 4, wobei, wenn ein Zustand, in dem eine Differenz zwischen einem Kupplungsdrehmomentschätzwert und einem Kupplungsdrehmomentanweisungswert größer als oder gleich wie ein vorbestimmter Wert ist, für eine vorbestimmte Zeitspanne andauert, wenn der Steuerungsteil (7) eine elektrische Anweisung ausgibt, um die Kupplung (SSC) in einen ausgerückten Zustand zu bringen, der Steuerungsteil (7) bestimmt, dass ein Schleppzustand der Kupplung (SSC) aufgetreten ist.

6. Fahrzeugantriebsvorrichtung (3) nach einem der Ansprüche 1 bis 5, wobei
der Übertragungsmechanismus (7) ein Eingriffselement (C1) hat, das eine Leistungsübertragung zwischen dem Eingangsbauteil (5a) und dem Ausgangsbauteil (5b) verbinden und trennen kann, und
wenn der Steuerungsteil (7) bestimmt, dass eine Drehzahl des Eingangsbauteils (5a) geringer als oder gleich wie ein vorbestimmter Wert ist, wenn der Steuerungsteil (7) bestimmt, dass ein Schleppzustand der Kupplung (SSC) aufgetreten ist, und eine elektrische Anweisung ausgibt, um die Kupplung (SSC) in einen vollständig eingerückten Zustand zu bringen, der Steuerungsteil (7) eine elektrische Anweisung ausgibt, um das Eingriffselement (C1) in einen ausgerückten Zustand zu bringen.

7. Fahrzeugantriebsvorrichtung (3) nach einem der Ansprüche 1 bis 6, des Weiteren mit einer ersten drehenden elektrischen Maschine (4), die in einem Leistungsübertragungspfad zwischen der Kupplung (SSC) und dem Eingangsbauteil (5a) vorgesehen ist, wobei
der Steuerungsteil (7) eine elektrische Anweisung ausgibt, um die Kupplung (SSC) in einen ausgerückten Zustand zu bringen, beim Umschalten von einem HV-Fahren, in dem ein Fahren unter Verwendung einer Antriebsleistung der Maschine (2) durchgeführt wird, zu einem EV-Fahren, in dem ein Fahren unter Verwendung einer Antriebsleistung der ersten drehenden elektrischen Maschine (4) durchgeführt wird.

8. Hybridfahrzeug (100) mit:
einer Fahrzeugantriebsvorrichtung (3), die eine Fahrzeugantriebsvorrichtung (3) nach einem der Ansprüche 1 bis 7 ist und eine erste drehende elektrische Maschine (4) in einem Leistungsübertragungspfad zwischen der Kupplung (SSC) und dem Eingangsbauteil (5a) hat;
einer zweiten drehenden elektrischen Maschine (20); und
Vorderrädern (11) und Hinterrädern (12), wobei
eines von einem Paar der Vorderräder (11) und einem Paar der Hinterräder (12) mit dem Ausgangsbauteil (5b) antriebsgekoppelt ist,
ein anderes von einem Paar der Vorderräder (11) und einem Paar der Hinterräder (12) mit der zweiten drehenden elektrischen Maschine (20) antriebsgekoppelt ist,
der Getriebemechanismus (5) ein Eingriffselement (C1) hat, das eine Leistungsübertragung zwischen dem Eingangsbauteil (5a) und dem Ausgangsbauteil (5b) verbinden und trennen kann, und
das Eingriffselement (C1) in einen ausgerückten Zustand gebracht wird, um die Maschine (2) anzutreiben, und unter Verwendung von elektrischer Leistung, die durch die erste drehende elektrische Maschine (4) erzeugt wird, die zweite drehende elektrische Maschine (20) angetrieben wird, wodurch ein Fahren durchgeführt werden kann.

## Revendications

1. Dispositif d'entraînement de véhicule (3) comprenant :
un mécanisme de transmission (5) qui comprend un élément d'entrée (5a) entraîné par un moteur (2) et un élément de sortie (5b) accouplé en entraînement à des roues (11) et qui peut changer un rapport de vitesse entre l'élément d'entrée (5a) et l'élément de sortie (5b) ;
un embrayage (SSC) qui est interposé entre un arbre de sortie (2a) du moteur (2) et l'élément d'entrée (5a) et qui peut raccorder et désolidariser la transmission de puissance entre l'arbre de sortie (2a) du moteur (2) et l'élément d'entrée (5a) du mécanisme de transmission (5) ; et
un dispositif de commande (7) qui commande l'embrayage et le débrayage de l'embrayage (SSC) par des instructions électriques,
dans lequel
lorsque la partie de commande (7) détermine qu'un état de traînée de l'embrayage (SSC) s'est produit lorsque la partie de commande (7) émet une instruction électrique pour amener l'embrayage (SSC) dans un état débrayé, la partie de commande (7) émet une instruction électrique pour amener l'embrayage (SSC) dans un état complètement embrayé,
le dispositif d'entraînement de véhicule étant **caractérisé en ce que**
lorsque la partie de commande (7) détermine qu'un état de résistance de l'embrayage (SSC) s'est produit, la partie de commande (7) émet une instruction électrique pour maintenir un état embrayé de l'embrayage (SSC) présent à un moment où il est déterminé qu'un état de résistance s'est produit, jusqu'à ce qu'il soit déterminé qu'une rotation différentielle entre l'arbre de sortie (2a) du moteur (2) et l'élément d'entrée (5a) du mécanisme de transmission (5) a convergé, et lorsqu'il est déterminé que la rotation différentielle a convergé, la partie de commande (7) émet une instruction électrique pour amener l'embrayage (SSC) dans un état complètement embrayé.

2. Dispositif d'entraînement de véhicule (3) selon la revendication 1, dans lequel lorsque la partie de commande (7) détermine qu'un état de résistance de l'embrayage (SSC) s'est produit lorsque la partie de commande (7) émet une instruction électrique pour amener l'embrayage (SSC) dans un état débrayé, la partie de commande (7) émet une instruction électrique pour limiter le couple de sortie du moteur (2) à une valeur inférieure ou égale à une valeur de couple prédéterminée de sorte à réduire la rotation différentielle entre l'arbre de sortie (2a) du moteur (2) et l'élément d'entrée (5a) du mécanisme de transmission (5).

3. Dispositif d'entraînement de véhicule (3) selon la revendication 1, dans lequel lorsque la partie de commande (7) détermine qu'un état de résistance de l'embrayage (SSC) s'est produit lorsque la partie de commande (7) émet une instruction électrique pour amener l'embrayage (SSC) dans un état débrayé, la partie de commande (7) émet une instruction électrique pour limiter le couple de sortie du moteur (2) à une valeur inférieure ou égale à une valeur de couple prédéterminée de sorte à annuler la rotation différentielle entre l'arbre de sortie (2a) du moteur (2) et l'élément d'entrée (5a) du mécanisme de transmission (5).

4. Dispositif d'entraînement de véhicule (3) selon la revendication 2 ou 3, dans lequel la valeur de couple prédéterminée est fixée à une valeur inférieure ou égale à une valeur d'estimation de couple d'embrayage.

5. Dispositif d'entraînement de véhicule (3) selon l'une quelconque des revendications 1 à 4, dans lequel, lorsqu'un état dans lequel une différence entre une valeur d'estimation de couple d'embrayage et une valeur d'instruction de couple d'embrayage est supérieure ou égale à une valeur prédéterminée se poursuit pendant une période de temps prédéterminée lorsque la partie de commande (7) émet une instruction électrique pour amener l'embrayage (SSC) dans un état débrayé, la partie de commande (7) détermine qu'un état de résistance de l'embrayage (SSC) s'est produit.

6. Dispositif d'entraînement de véhicule (3) selon l'une quelconque des revendications 1 à 5, dans lequel
le mécanisme de transmission (7) comprend un élément de mise en prise (C1) qui peut raccorder et désolidariser la transmission de puissance entre l'élément d'entrée (5a) et l'élément de sortie (5b), et
lorsque la partie de commande (7) détermine qu'une vitesse de rotation de l'élément d'entrée (5a) est inférieure ou égale à une valeur prédéterminée lorsque la partie de commande (7) détermine qu'un état de résistance de l'embrayage (SSC) s'est produit et émet une instruction électrique pour amener l'embrayage (SSC) dans un état complètement embrayé, la partie de commande (7) émet une instruction électrique pour amener l'élément de mise en prise (C1) dans un état débrayé.

7. Dispositif d'entraînement de véhicule (3) selon l'une quelconque des revendications 1 à 6, comprenant une première machine électrique tournante (4) prévue dans un chemin de transmission de puissance entre l'embrayage (SSC) et l'élément d'entrée (5a),
dans lequel
la partie de commande (7) émet une instruction électrique pour amener l'embrayage (SSC) dans un état débrayé, lors du passage d'un déplacement HV dans lequel le déplacement est effectué en utilisant la puissance d'entraînement du moteur (2) à un déplacement EV dans lequel le déplacement est effectué en utilisant la puissance d'entraînement de la première machine électrique tournante (4).

8. Véhicule hybride (100) comprenant :
un dispositif d'entraînement de véhicule (3) étant un dispositif d'entraînement de véhicule (3) selon l'une quelconque des revendications 1 à 7 et comprenant une première machine électrique tournante (4) dans un chemin de transmission de puissance entre l'embrayage (SSC) et l'élément d'entrée (5a) ;
une seconde machine électrique tournante (20) ; et
des roues avant (11) et des roues arrière (12),
dans lequel
une parmi une paire de roues avant (11) et une paire de roues arrière (12) est accouplée en entraînement à l'élément de sortie (5b),
une autre parmi la paire de roues avant (11) et la paire de roues arrière (12) est accouplée en entraînement à la seconde machine électrique tournante (20),
le mécanisme de transmission (5) comprend un élément de mise en prise (C1) qui peut raccorder et désolidariser la transmission de puissance entre l'élément d'entrée (5a) et l'élément de sortie (5b), et
l'élément de mise en prise (C1) est amené dans un état débrayé pour entraîner le moteur (2), et en utilisant l'énergie électrique produite par la première machine électrique tournante (4), la seconde machine électrique tournante (20) est entraînée, par quoi un déplacement peut être effectué.
